(19) Europäisches Patentamt

European Patent Office

Office européen des brevets

(11) **EP 0 509 577 B1**

(12) ## EUROPEAN PATENT SPECIFICATION

(45) Date of publication and mention
of the grant of the patent:
**13.11.1996 Bulletin 1996/46**

(51) Int Cl.6: **H01S 3/06**, H01S 3/23,
H04B 10/00

(21) Application number: **92200936.0**

(22) Date of filing: **02.04.1992**

(54) **An active fiber optical amplifier for a fiber optics telecommunication line**

Optischer Verstärker mit aktiver Faser für faseroptische Nachrichtenübertragungsleitung

Amplificateur optique à fibre active pour ligne de télécommunication à fibre optique

(84) Designated Contracting States:
**DE ES FR GB**

(30) Priority: **15.04.1991 IT MI911029**

(43) Date of publication of application:
**21.10.1992 Bulletin 1992/43**

(73) Proprietor: **PIRELLI CAVI S.p.A.**
**20126 Milano (IT)**

(72) Inventors:
• **Grasso, Giorgio**
**I-20052 Monza (MI) (IT)**
• **Righetti, Aldo**
**I-20146 Milano (IT)**

(74) Representative: **Checcacci, Giorgio et al**
**PORTA, CHECCACCI & BOTTI s.r.l.**
**Viale Sabotino, 19/2**
**I-20135 Milano (IT)**

(56) References cited:
• **IEEE PHOTONICS TECHNOLOGY LETTERS vol. 2, no. 12, December 1990, NEW YORK, US pages 866 - 868; C.R. GILES AT AL.: 'Dynamic gain equalization in two-stage fiber amplifiers'**
• **ELECTRONICS LETTERS. vol. 25, no. 20, 28 September 1989, STEVENAGE GB pages 1393 - 1394; J.L GIMLETT ET AL.: 'Impact of multiple reflection noise in Gbit/s lightwave systems with optical fibre amplifiers'**
• **TECHNICAL DIGEST SERIES, OPTICAL AMPLIFIERS AND THEIR APPLICATIONS vol. 13, 1990, WASHINGTON D.C., US pages 126 - 129; T. KAKINUMA ET AL.: 'Gain and noise characteristics of Er-doped fiber amplifiers with different pumping directions'**
• **ELECTRONICS LETTERS. vol. 26, no. 10, 1 May 1990, STEVENAGE GB pages 661 - 662; H. MASUDA ET AL.: 'High gain two-stage amplification with erbium-doped fibre amplifier'**
• **IEEE PHOTONICS TECHNOLOGY LETTERS vol. 3, no. 3, March 1991, NEW YORK, US pages 253 - 255; R.L. LAMING ET AL.: 'High power erbium-doped-fiber amplifiers operated in the saturated regime'**
• **OPTICS COMMUNICATIONS vol. 81, no. 1/2, 1 February 1991, AMSTERDAM, NL pages 23 - 26; B. PEDERSEN ET AL.: 'Erbium-doped fibre amplifier: efficient pumping at 807 nm'**

## Description

This invention relates to an active fiber optical amplifier for a fiber optics telecommunication line through which a signal is caused to pass in a predetermined direction.

Known are fiber optics telecommunication lines wherein the transmission signal is a suitably modulated light signal guided through optical fibers; such lines are valued especially because of their ability to transmit a signal over great distances with low attenuation.

Also recognized is that, in order to both have the transmission range increased and a signal of suitable power fed to the input of some receiving apparatus, the signal may have to be amplified; such amplifications can be either provided by repeaters or optical amplifiers.

In the former instance, the optical signal would be converted into a different, usually electric, form which is then amplified, as by electronic apparatus, and converted back into a light signal; this is the simpler method, but also one that introduces transmission rate limitations due to the signal transmission rate being conditioned by the processing rate of the amplifying apparatus employed.

By contrast, in the latter instance, the telecommunication light signal would be amplified as it is, namely in the optical form. For this purpose, a so-called "active" fiber section is provided by adding suitable dopants to an optical fiber; into this active fiber, so-called "pumping" luminous energy is supplied, which has a shorter wavelength than the signal and excites the electrons of the dopants present in the fiber to a lasing level. The passage of a signal at a wavelength corresponding to said lasing level is apt to cause the decay from said lasing level to the ground state of the dopant electrons, with an associated coherent light emission, thereby amplifying the signal.

The pumping energy is usually provided by a laser source, injected into an optical fiber, and inserted into the fiber that carries the signal by means of a dichroic coupler (or optical multiplexer). Within the active fiber, the pumping energy propagates with progressive attenuation of its luminous power along the fiber, mainly due to energy being transferred to the dopants, exciting them to the lasing level.

The minimum luminous power required at each section of the active fiber to produce amplification gain is referred to as the threshold power; above this level, there would occur a so-called reversal of population among the dopant atoms, meaning that the number of the atoms in the excited lasing level would be larger than the number of the atoms in the ground, unexcited state.

Where the luminous power exceeds the threshold level, the probability of the signal photons meeting with an excited atom and, accordingly, generating a second photon (with decay of the atom to the ground state) is higher than the probability that the photons meet with an atom in the ground state and are absorbed thereby (with excitation of the atom to an higher level). The outcome of this is a gain in the signal which is the higher the greater is the number of the atoms in the lasing state, i.e. the more complete is the population inversion.

However, the desired amplifying effect is always accompanied by an undesired effect of noise introduction.

This may originate essentially as noise from random-type light emissions in the line, or be due to signal attenuation brought about by components being connected in the line (insertion attenuations), which would lower the level of the signal relatively to the noise and thus make the weight of the latter more important.

A first cause of disturbance is associated with the spontaneous emission from the active fiber showing up when its atoms are in the excited state; in fact, after a time delay, the excited dopant atoms decay spontaneously to the ground state from the lasing level, emitting a photon. The diffused random brightness thus generated constitutes noise affecting a signal being transmitted. This noise intensity increases with population inversion, i.e. as the number of atoms in the excited state increases; it has been found, however, that as inversion decreases, the noise due to spontaneous emission decreases at a lower rate than gain. Efforts have been made, therefore, to keep the inversion level high throughout the active fiber length, by providing a selective mirror element which could reflect just the pumping light, thereby the latter flowed through the active fiber in both directions to provide a smaller variation in pumping power along the fiber and a reduction in the above-mentioned noise. Reference can be made in this respect to Italian Patent Application No. 22196-A/89 (EP application N° 90202736.6) by this same Applicant.

In connection with noise contributions from the supply directions of the pumping energy, and different gains, see also "1990 TECHNICAL DIGEST SERIES VOL. 13, Optical Amplifiers and their Applications", pages 126-129.

Another type of noise generated in active fiber amplifiers is the so-called interferometric noise, which is due to beats occurring between the forward signal and reflected signals within one fiber; such signals are typically caused by discontinuity surfaces (which can be avoided or at least limited) but also by unavoidable (Rayleigh's, Brillouin's) scattering phenomena taking place within the fiber itself. In order to prevent the reflected signals from propagating, and hence subdue interferometric noise, the use of so-called optical isolators has been proposed which only admit the signals in one direction. See on the subject Italian Patent Application No. 20434-A/90 (EP application N° 91108162.8) by this same Applicant, or Electronics Letters, vol. 25, no. 20, September 1989, pages 1393-1394.

A two stage fiber amplifier is disclosed by IEEE Photonic Technology Letters, vol.2, no. 12, December 1990, pages 866-868. The two stages have complementary gain spectra to correct relative gain differences among channels in WDM amplified lightwave systems.

This invention as defined in claim 1 relates to an active fiber two-stage optical amplifier for a fiber optics telecommunication line through which a signal is caused to pass in a predetermined direction, of the type comprising an active fiber doped with a fluorescent dopant and an optical coupler through which pumping luminous energy is fed into the active fiber, <u>characterized in that</u> it comprises an upstream amplifying stage and a downstream amplifying stage, consecutively connected along the line in the direction of the transmission signal, in which the upstream amplifying stage comprises an upstream active fiber doped with a fluorescent dopant and connected serially to the optical fiber line, an upstream optical coupler connected serially downstream from the upstream active fiber, means for supplying pumping energy towards the upstream active fiber through the coupler, said coupler being oriented to cause pump energy travel towards said upstream active fiber in the opposite direction from the predetermined signal direction, and the downstream amplifying stage comprises a downstream active fiber doped with a fluorescent dopant and connected serially in the optical fiber, a downstream optical coupler connected serially in the downstream active fiber, means of supplying pumping energy into the downstream active fiber through the downstream coupler, a first optical isolator serially connected upstream of the downstream active fiber, a second optical isolator serially connected downstream from the downstream active fiber.

This approach, which apportions the amplification to two discrete amplifying stages, might at once appear such as to expand the noise introduced on account of the larger number of components connected in the line; it has been found that, on the contrary, it affords major advantages just in terms of a reduction in the noise being introduced, as explained herein below.

The provision of an upstream stage where the transmission signal is introduced into the amplifying fiber with no attenuation and the signal is only amplified to a limited extent allows the downstream stage to be input a signal which is at a sufficiently high level to be amplified to the desired value with negligible noise; stated otherwise, in assessing the overall noise of the amplifier, the contribution from the attenuations due to the discrete elements (couplers, isolators) present is reduced by a factor equal to the active fiber gain.

As for the noise generated upstream in the active fiber, this comprises both the interferometric noise component and the noise component from spontaneous emission of the excited dopant atoms; whereas interferometric noise is proportional to the fourth power of the gain in the active fiber, the noise from spontaneous decay is proportional to the degree of inversion in the population of dopant atoms.

It has been found, according to this invention, that by selecting for the upstream active fiber a sufficiently low gain, the interferometric noise in that fiber can be made negligible, and that by simultaneously selecting for the upstream active fiber a sufficiently high gain, the contribution to the overall noise figure of the amplifier from the attenuations and noise downstream can be made negligible.

The optical coupler can be oriented so that the pumping energy is supplied into the downstream active fiber, either in the same direction as the signal, or in the opposite direction, or even in both directions.

In the former, and preferred, case, the coupler would be positioned upstream of the active fiber; in the latter case, the coupler would be positioned between the active fiber and the upstream isolator.

For the upstream section of the active fiber, the pumping energy supply direction of choice runs instead opposite from that of the transmission signal because the noise from the attenuation due to the coupler being connected in would be then attenuated by a factor equal to the gain in the active fiber itself, as would all noises downstream from said upstream active fiber; in other words, no attenuating elements are introduced at a location where the signal is at its lowest level.

The gain of the upstream active fiber is below a predetermined maximum value, such that the interferometric noise in the upstream active fiber can be made negligible, and above a minimum value whereby the contribution to the overall noise figure of the amplifier from the combined noise figure of the components downstream from the upstream section of active fiber will be less than a predetermined fraction of, preferably 1/10, the noise figure of the upstream section of the active fiber.

More preferably, the predetermined maximum value is 100 times lower than the geometric mean of the reflectivities upstream and downstream from the upstream section of active fiber. Still more preferably, the predetermined maximum value is 100 times lower than the geometric mean of the reflectivity due to Rayleigh's scattering through the line fiber upstream of the upstream section of active fiber, and the reflectivity of the downstream insulator toward the active fiber.

Gain values within the range of 8 to 15 dB are preferred.

According to a further aspect, the present invention as defined in claim 10 relates to a method for amplifying an optical signal in a fiber optics telecommunication line, through which a signal is caused to pass in a predetermined direction, by means of an optical active fiber amplifier, which comprises the steps of:

- amplifying the signal in an upstream amplifying stage, having an upstream active fiber directly coupled to the telecommunication line, with a gain less than a predetermined maximum value, such as to make interferometric noise in the upstream active fiber negligible, and more than a minimum value, such that the contribution to the overall noise figure of the amplifier from the noise figure of the combined components downstream from the upstream active fiber section is made less than 1/10 the noise figure of the upstream active fiber section; and

- successively further amplifying the signal in a downstream amplifying stage, consecutively connected along the line in the direction of the transmission signal, with a gain which is the complement to the desired overall amplifying gain of the amplifier, and preventing reflections of signal into the downstream amplifying stage.

Preferably said predetermined maximum value is 100 times lower than the geometric mean of the reflectivities upstream and downstream of the upstream active fiber.

More preferably said predetermined maximum value is 100 times lower than the geometric mean of the reflectivity from Rayleigh's scattering through the line fiber upstream of the upstream active fiber and the reflectivity of the downstream amplifying stage toward the upstream active fiber.

Further features and advantages of an optical amplifier according to the invention will become more clearly apparent from the following detailed description of a preferred embodiment thereof, to be read in conjunction with the accompanying drawings, where:

Figure 1 illustrates an amplifier according to an embodiment of the invention, in diagrammatic form; and
Figure 2 illustrates for comparison, in diagrammatic form, an amplifier according to the prior art.

An optical amplifier 1 embodying this invention is connected serially in an optical fiber 2, also referred to herein as line fiber, through which an optical transmission signal is driven in a predetermined direction, from left to right in the diagram as indicated by arrows S.

The amplifier 1 comprises a downstream section of active fiber 3, also referred to herein as downstream active fiber, which connects serially to the line fiber 2, and a downstream dichroic coupler 4 connected serially in the optical fiber 2 upstream of the downstream active fiber section 3.

The active fiber 3 is fed, via the coupler 4 and in the same direction as the signal, a luminous pumping energy with an appropriate wavelength which is supplied from a suitable supply means 5. First and second optical isolators, 7 and 8, are connected serially in the fiber 2, respectively upstream of, and downstream from, the downstream active fiber 3.

The active fiber 3, coupler 4, pumping means 5, and insulators 7, 8 jointly form a downstream amplifying stage $S_V$.

In addition, the amplifier 1 comprises an upstream section of active fiber 9, also referred to herein as upstream active fiber, which is connected serially in the optical fiber 2, at a location upstream of the first isolator 7, and an upstream dichroic coupler 10, which is connected serially in the optical fiber 2 between the upstream active fiber 9 and the first isolator 7.

Through coupler 10, the upstream active fiber 9 is fed, in the opposite direction from the signal direction, a luminous pumping energy with a suitable wavelength, being supplied by a suitable supply means 11. No isolator is provided upstream of active fiber 9.

The active fiber 9, coupler 10, and pumping means 11 jointly form an upstream amplifying stage $S_M$.

The active optical fibers, 3 and 9, of the two amplifying stages are optical fibers which are core doped with a refractive index modifier, such as germanium or aluminum, to obtain a desired profile for the refractive indices, and which are made "active" by the added presence of a fluorescent dopant, preferably erbium, in the core.

Fibers of the type described above are known in the art, e.g. from the aforementioned prior patents.

The luminous pumping energy supply means, 5 and 11, consist preferably of conventional laser diodes of suitable power which connect to their respective couplers, 4 and 10, through respective optical fiber sections, 6 and 12.

The optical couplers 4 and 10 comprise, of preference, conventional fused fiber couplers, not further described herein.

This represents a preferable solution in that it eliminates for such components reflective phenomena due to the presence of air-to-glass interfacing surfaces, likely to add to interferometric noise.

The pumping powers supplied into the downstream and upstream fiber sections are to maintain a higher power than threshold power at the section more remote from the coupler, that is to maintain a state of complete population inversion in the fibers.

In an amplifier 1 according to the invention, having the above described construction, the overall noise power appearing at its input can be obtained from equation (I) below:

$$(I) \qquad N_A = N_{AM} + N_{AV} / (A_{acc}\, A_{is}\, G_M)$$

where $N_{AM}$ and $N_{AV}$ are the noises generated in the upstream and downstream active fibers 9 and 3, respectively, $A_{acc}$ is the sum of the attenuations of couplers 10 and 4, $A_{is}$ is the attenuation of isolator 7, and $G_M$ is the gain of the upstream active fiber 9.

The attenuations from the insertion of passive optical components along the line, such as optical couplers, isolators, etc., are to be assumed in the general range of 0.5 to 2 dB for each component, with commercially available optical components.

The noise for the upstream active fiber 9 can be obtained, in turn, from the following equation (II):

$$(II) \qquad N_{AM} = N_{AMdec} + N_{AMinterf}$$

where $N_{AMdec}$ is the noise from spontaneous emission, and $N_{AMinterf}$ is interferometric noise.

These noise components are given by the following equations (III) and (IV):

$$\text{(III)} \qquad N_{AMdec} = n_{sp}\, h\, v\, (G_M - 1)\, /\, G_M$$

$$\text{(IV)} \qquad N_{AMinterf} = H\, G_M^{\,4}\, R_i\, R_o$$

where $n_{sp}$ is the degree of inversion in the upstream active fiber 9, h is Planck's constant, v is the frequency of the light signal, H is a constant, and $R_i$ and $R_o$ are the reflectivity values at the input and output ends of active fiber 9.

Further information about interferometric noise can be had from ELECTRONIC LETTERS, vol. 25, no. 20, September 28, 1989, pages 1393 and 1394.

It can be seen from equation (I) that by selecting a high value of $G_M$, the weight of the noise introduced downstream from the active fiber 9 can be made negligible with respect to the noise introduced into the active fiber 9 itself, namely:

$$\text{(V)}\ N_A = N_{AM}.$$

This result can be obtained, in accordance with an embodiment of this invention, by selecting a value of $G_M$ such that the contribution to the overall noise figure from the noise figure of all the components downstream from active fiber 9 is less than 1/10 of the noise figure of fiber 9 itself; preferably, this gain would exceed 8 dB.

Noise figure is a quantity, well known in the art, which may be defined as the ratio of the overall noise power at the output of a system to the power of the input noise to the system.

On the other hand, it can be seen from equations (II) and (IV) that by selecting a low value of $G_M$, the interferometric noise contribution can be made negligible compared to spontaneous emission noise, namely:

$$\text{(VI)}\ N_{AM} = N_{AMdec}$$

To this aim, the value of $G_M$ is kept, according to the invention, below a predetermined value; specifically, $G_M$ is 100 times lower than the geometric mean of the reflectivity due to Rayleigh's scattering through the optical fiber 2 upstream of the active fiber 9, and the reflectivity of isolator 7, or more generally, than the geometric mean of the reflectivities upstream of and downstream from the active fiber toward the active fiber itself; this gain is preferably lower than 15 dB.

It should be noted that the optical isolator 7 located directly downstream from the upstream active fiber section 9 has a limited reflectivity toward section 9 at the wavelength of the transmission signal, preferably exceeding the reflectivity from Rayleigh's scattering through the line optical fiber 2 by no more than 10 dB.

A typical value for reflectivity from Rayleigh's scattering through a line fiber is approximately 30 dB, and optical insulator 7 may have a reflectivity of 40 dB toward active fiber 9.

With an amplifier according to the invention, and the upstream active fiber 9 sized within the gain range specified above, the overall noise of the amplifier shows to be substantially coincident with just the spontaneous noise decay in the fiber 9, namely:

$$\text{(VII)} \qquad N_A = N_{AMdec}$$

The result given by equation (VII) shows that amplifier 1 affords high gain with a minimum of noise.

In a preferred embodiment, the active optical fibers, 3 and 9, are silicon fibers doped with germanium and having a numerical aperture NA = 0.19 and a cut-off wavelength $\lambda_c = 900$ nm.

The fibers 3 and 9 are made active by the presence of erbium ($Er^{+++}$ ions), as provided by doping the fibers with $Er_2O_3$; the amount of the dopant present corresponds to a signal attenuation of 7.8 dB/m at a wavelength $\lambda = 1536$ nm.

The optical transmission signal has wavelength $\lambda = 1536$ nm, corresponding to the so-called "third window" where attenuation in the fiber is minimal.

The pumping energy supply means, 5 and 11, comprise respective laser diodes having powers of 15 and 10 mW, respectively, and emission wavelength $\lambda = 980$ nm.

The optical couplers, 4 and 10, are preferably fused fiber couplers.

In the exemplary embodiment described, the length of the upstream section of active fiber 9, when combined with the pumping power specified and the amount of dopant present therein, is selected to give a gain of 10 dB; the length of the downstream active fiber section 3 is selected to provide a gain of 28 dB, thereby the overall gain of the amplifier 1 is 38 dB.

This amplifier has shown a sensitivity of -45 dBm at 565 Mbit/s, with probability for error $P_E = 10^{-4}$.

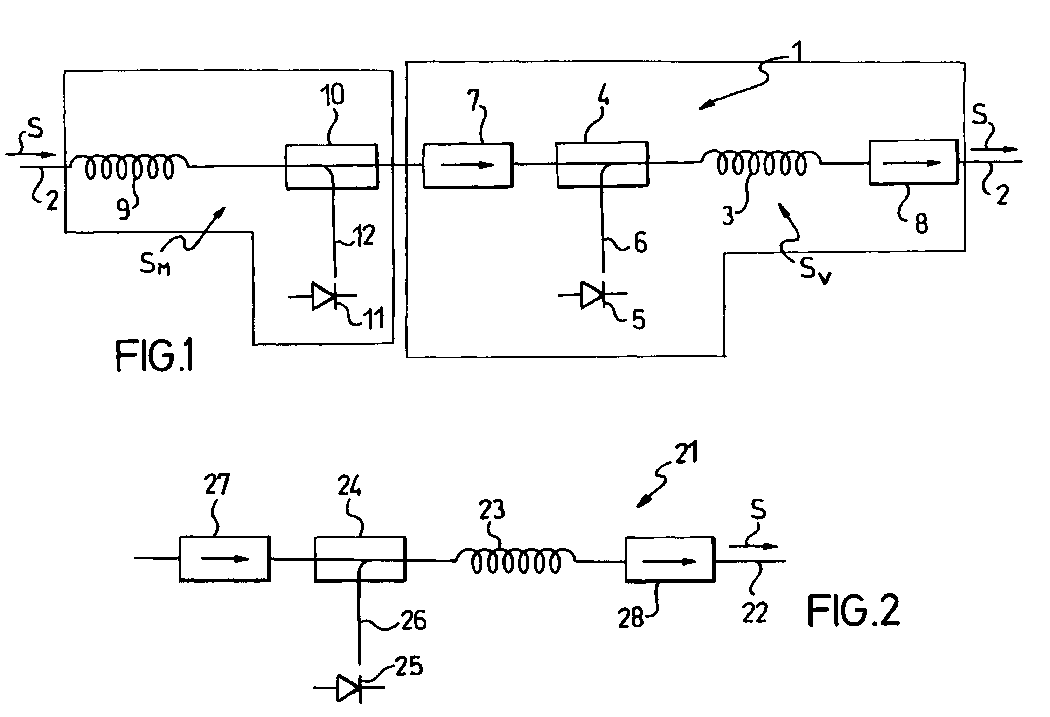

For comparison purposes, a conventional, single stage amplifier 41 has been made with the construction shown schematically in Figure 2.

The amplifier 21, which is connected serially in a line optical fiber 22, comprises a single active fiber section 23 and a dichroic coupler 24 connected serially along the fiber 22, upstream of the active fiber section 23.

Through the coupler 24, the active fiber 23 is fed, in the same direction as the signal, a pumping energy supplied by a laser diode 25 on an optical fiber 26 connected to the coupler. First and second optical insulators, 27 and 28, are connected serially in the fiber 22, respectively upstream of and downstream from the active fiber 23.

The active fiber 23 is a silicon fiber doped with germanium, having numerical aperture NA = 0.19 and cut-off wavelength $\lambda$ = 900 nm. This fiber 23 is made active by the provision of erbium ($Er^{+++}$ ions) as by doping with $Er_2O_3$.

The optical transmission signal has wavelength $\lambda$ = 1536 nm, corresponding to the so-called "third window" where attenuation in the fiber is at a minimum.

The laser diode 25 has a power of 25 mW and emission wavelength $\lambda$ = 980 nm.

Optical coupler 24 is a fused fiber one having an attenuation of 1 dB. Optical coupler 27 has an attenuation of 1.5 dB.

The length of the active fiber section 23, together with the pumping power specified and the amount of dopant present therein ($n_{sp}$ = 1,1) is selected for a gain of 38 dB.

This amplifier 21 has shown a sensitivity of -43.5 dBm at 565 Mbit/s, with probability for error $P_E = 10^{-4}$.

In comparison, the enhanced sensitivity afforded by the amplifier 1 embodying this invention is self-evident.

The structure of this invention avoids the introduction of passive components before the signal has undergone a first amplification, by virtue of coupler 10 being located downstream from the active fiber 9; this solution, which in a conventional amplifier would entail in itself a decreased gain for a given pumping power over the traditional approach providing the optical coupler upstream of the active fiber, has been selected because the amplifying stage $S_M$ including fiber 9 performs essentially the function of reducing noise, and its gain does not limit the performance of the amplifier as a whole.

The amplification gain sought is achieved through stage $S_V$, which provides the remainder of the gain and is designed and sized to suit this purpose; it has preferably the construction shown, although to meet particular applicational requirements it could also include additional elements, such as means of reflecting the pumping power, a second pumping means to operate in the opposite direction from coupler 4 and laser diode 5 and the like.

**Claims**

1. An active fiber two-stage optical amplifier (1) for a fiber optics telecommunication line (2) through which a signal is caused to pass in a predetermined direction (S), of the type comprising an active fiber doped with a fluorescent dopant and an optical coupler through which pumping luminous energy is fed into the active fiber, characterized in that it comprises an upstream amplifying stage ($S_M$) and a downstream amplifying stage ($S_V$), consecutively connected along the line (2) in the direction (S) of the transmission signal, in which the upstream amplifying stage ($S_M$) comprises an upstream active fiber section (9) doped with a fluorescent dopant and low-loss connected serially to the optical fiber line (2), an upstream optical coupler (10) connected serially downstream from the upstream active fiber section (9), means (11, 12) for supplying pumping energy towards the upstream active fiber section (9) through the upstream coupler (10), said coupler being oriented to cause pump energy travel towards said upstream active fiber section (9) in the opposite direction from the predetermined signal direction (S), and the downstream amplifying stage ($S_V$) comprises a downstream active fiber section (3) doped with a fluorescent dopant and connected serially in the optical fiber (2), a downstream optical coupler (4) connected serially to the downstream active fiber section (3), means (5, 6) of supplying pumping energy into the downstream active fiber section (3) through the downstream coupler (4), a first optical isolator (7) serially connected upstream of the downstream active fiber section (3), a second optical isolator (8) serially connected downstream from the downstream active fiber section (3), the gain of the upstream active fiber section (9) being less than a predetermined maximum value, such as to make the interferometric noise in the upstream active fiber section (9) negligible, and more than a minimum value, such that the contribution to the overall noise figure of the amplifier (1) from the noise figure of the combined components downstream from the stream active fiber section (9) is made less than a predetermined fraction of the noise figure of the upstream active fiber section (9).

2. An optical am lifier according to Claim 1, characterized in that the predetermined fraction is 1/10.

3. An optical amplifier according to Claim 2, characterized in that the predetermined maximum value is 100 times lower than the geometric mean of the reflectivities upstream and downstream of the upstream active fiber section (9).

4. An optical amplifier according to Claim 3, characterized in that the predetermined maximum value is 100 times lower than the geometric mean of the reflectivity from Rayleigh's scattering through the line fiber upstream of the upstream active fiber section (9) and the reflectivity of the first insulator (7) toward the upstream active fiber section (9).

5. An optical amplifier according to Claim 2, characterized in that the gain of the upstream active fiber (9) is within the range of 8 to 15 dB.

6. An optical amplifier according to Claim 1, characterized in that the downstream coupler (4) is located upstream of the downstream active fiber (3) and is oriented to cause pump energy travel in the downstream active fiber (3) in the same direction as the predetermined signal direction (S).

7. An optical amplifier according to Claim 1, characterized in that the core dopant in the active fiber sections (3,9) is erbium.

8. An optical amplifier according to Claim 1, characterized in that the optical couplers (4,10) are fused fiber couplers.

9. An optical amplifier according to Claim 1, characterized in that the first optical isolator (7) has, toward the upstream active fiber (9) and at the same wavelength as the telecommunication signal, a reflectivity exceeding the reflectivity from Rayleigh's diffusion through the line fiber (2) by no more than 10 dB.

10. A method for amplifying an optical signal in a fiber optics telecommunication line, through which a signal is caused to pass in a predetermined direction (S), by means of an optical active fiber amplifier (1), <u>characterized in that</u> it comprises the steps of:

- amplifying the signal in a contradirectionnaly pumped upstream amplifying stage ($S_M$) having an upstream active fiber (9) directly coupled to the telecommunication line, with a gain less than a predetermined maximum value, such as to make interferometric noise in the upstream active fiber (9) negligible, and more than a minimum value, such that the contribution to the overall noise figure of the amplifier (1) from the noise figure of the combined components downstream from the upstream active fiber section (9) is made less than 1/10 the noise figure of the upstream active fiber section (9); and
- successively further amplifying the signal in a downstream amplifying stage ($S_v$), consecutively connected along the line (2) in the direction (S) of the transmission signal, with a gain which is the complement to the desired overall amplifying gain of the amplifier (1), and preventing reflections of signal into the downstream amplifying stage.

11. A method according to Claim 10, characterized in that the predetermined maximum value is 100 times lower than the geometric mean of the reflectivities upstream and downstream of the upstream active fiber (9).

12. A method according to Claim 10, characterized in that the predetermined maximum value is 100 times lower than the geometric mean of the reflectivity from Rayleigh's scattering through the line fiber upstream of the upstream active fiber (9) and the reflectivity of the downstream amplifying stage ($S_v$) toward the upstream active fiber (9).

**Patentansprüche**

1. Optischer Zweistufen-Verstärker (1) mit einer aktiven Faser für eine faseroptische Telekommunikationsleitung (2), durch die ein Signal in einer vorbestimmten Richtung (S) geleitet wird, des Typs, der eine mit einer fluoreszierenden Dotiersubstanz dotierte aktive Faser und einen Optokoppler aufweist, durch den Lichtpumpenergie in die aktive Faser eingespeist wird, dadurch **gekennzeichnet**, daß er eine vordere Verstärkerstufe ($S_M$) und eine hintere Verstärkerstufe ($S_V$) aufweist, die entlang der Leitung (2) nacheinander in der Richtung (S) des Übertragungssignals geschaltet sind, wobei die vordere Verstärkerstufe ($S_M$) die folgenden Elemente aufweist: einen vorderen aktiven Faserabschnitt (9), der mit einer fluoreszierenden Dotiersubstanz dotiert ist und in Reihe durch eine Niedrigverlustverbindung mit der optischen Faserleitung (2) verbunden ist, einen vorderen Optokoppler (10), der in Reihe dem vorderen aktiven Faserabschnitt (9) nachgeschaltet ist, Einrichtungen (11, 12) zum Liefern von Pumpenergie an den vorderen aktiven Faserabschnitt (9) durch den vorderen Koppler (10), wobei der Koppler so ausgerichtet ist, daß Pumpenergie in der der vorbestimmten Signalrichtung (S) entgegengesetzten Richtung zu dem vorderen aktiven Faserabschnitt (9) geleitet wird, und die hintere Verstärkerstufe ($S_V$) folgende Elemente aufweist: einen hinteren aktiven Faserabschnitt (3), der mit einer fluoreszierenden Dotiersubstanz dotiert und in Reihe in die optische Faser (2) geschaltet ist, einen hinteren Optokoppler (4), der in Reihe mit dem hinteren aktiven Faserabschnitt (3) verbunden ist, Einrichtungen (5, 6) zum Liefern von Pumpenergie in den hinteren aktiven Faserabschnitt (3) durch den hinteren Koppler (4), einen ersten optischen Isolator (7), der in Reihe dem hinteren aktiven Faserabschnitt (3) vorgeschaltet ist, und einen zweiten optischen Isolator (8), der in Reihe dem hinteren aktiven Faserabschnitt (3) nachgeschaltet ist, wobei die Verstärkung des vorderen aktiven Faserabschnitts (9) geringer ist als ein vorbestimmter Maximalwert, so daß das Interferenzrauschen im vorderen aktiven Faserabschnitt (9) vernachlässigbar gering wird, und größer als ein Minimalwert, so daß der Beitrag zur Gesamt-Rauschzahl des Verstärkers (1) aus der Rauschzahl der Gesamtheit der dem vorderen Faserabschnitt (9) nachgeschalteten Komponenten geringer wird als ein vorbestimmter Bruchteil der Rauschzahl des vorderen aktiven Faserabschnitts (9).

2. Optischer Verstärker nach Anspruch 1, dadurch gekennzeichnet, daß der vorbestimmte Bruchteil 1/10 ist.

3. Optischer Verstärker nach Anspruch 2, dadurch gekennzeichnet, daß der vorbestimmte Maximalwert 100 mal kleiner ist als das geometrische Mittel der Reflektivitäten vor und nach dem vorderen aktiven Faserabschnitt (9).

4. Optischer Verstärker nach Anspruch 3, dadurch gekennzeichnet, daß der vorbestimmte Maximalwert 100 mal kleiner ist als das geometrische Mittel der Reflektivität durch Rayleigh-Streuung in der Leitungsfaser, die vor dem vorderen aktiven Faserabschnitt (9) ist, und der Reflektivität des ersten Isolators (7) in Richtung auf den vorderen aktiven Faserabschnitt (9).

5. Optischer Verstärker nach Anspruch 2, dadurch gekennzeichnet, daß die Verstärkung der vorderen aktiven Faser (9) im Bereich von 8 bis 15 dB liegt.

6. Optischer Verstärker nach Anspruch 1, dadurch gekennzeichnet, daß der hintere Koppler (4) der hinteren aktiven Faser (3) vorgeschaltet und so gerichtet ist, daß er Pumpenergie in die hintere aktive Faser (3) in Richtung der vorbestimmten Signalrichtung (S) schickt.

7. Optischer Verstärker nach Anspruch 1, dadurch gekennzeichnet, daß die Kerndotiersubstanz in den aktiven Faserabschnitten (3, 9) Erbium ist.

8. Optischer Verstärker nach Anspruch 1, dadurch gekennzeichnet, daß die Optokoppler (4, 10) geschweißte Faserkoppler sind.

9. Optischer Verstärker nach Anspruch 1, dadurch gekennzeichnet, daß der erste optische Isolator (7) in Richtung der vorderen aktiven Faser (9) und bei der Wellenlänge des Telekommunikationssignals eine Reflektivität aufweist, die die Reflektivität aufgrund von Rayleigh-Streuung durch die Leitungsfaser (2) um nicht mehr als 10 dB überschreitet.

10. Verfahren zum Verstärken eines optischen Signals in einer faseroptischen Telekommunikationsleitung, durch die ein Signal in einer vorbestimmten Richtung (S) mittels eines optischen Verstärkers (1) mit einer aktiven Faser geleitet wird, **gekennzeichnet** durch die folgenden Schritte:

- Verstärken des Signals in einer in Gegenrichtung gepumpten Verstärkerstufe ($S_M$) mit einer direkt mit der Telekommunikationsleitung verbundenen vorderen aktiven Faser (9), die eine Verstärkung hat, die geringer ist als ein vorbestimmter Maximalwert, damit so das Interferenzrauschen in der vorderen aktiven Faser (9) vernachlässigbar gering wird, und größer als ein Minimalwert, so daß der Beitrag zur Gesamt-Rauschzahl des Verstärkers (1) aus der Rauschzahl der Gesamtheit der dem vorderen Faserabschnitt (9) nachgeschalteten Komponenten geringer wird als 1/10 der Rauschzahl des vorderen aktiven Faserabschnitts (9); und

- danach weiteres Verstärken des Signals in einer hinteren Verstärkerstufe ($S_V$), die entlang der Leitung (2) in der Richtung (S) des Übertragungssignals in Reihe geschaltet ist und eine Verstärkung hat, die sich so verhält, daß die erwünschte Gesamtverstärkung des Verstärkers (1) entsteht, wobei Reflexionen des Signals in die hintere Verstärkerstufe verhindert werden.

11. Verfahren nach Anspruch 10, dadurch gekennzeichnet, daß der vorbestimmte Maximalwert 100 mal kleiner ist als das geometrische Mittel der Reflektivitäten vor und nach dem vorderen aktiven Faserabschnitt (9).

12. Verfahren nach Anspruch 10, dadurch gekennzeichnet, daß der vorbestimmte Maximalwert 100 mal kleiner ist als das geometrische Mittel der Reflektivität durch Rayleigh-Streuung in der Leitungsfaser, die vor dem vorderen aktiven Faserabschnitt (9) ist, und der Reflektivität des ersten Isolators (7) in Richtung auf den vorderen aktiven Faserabschnitt (9).

**Revendications**

1. Amplificateur optique (1) à deux étages de fibre active, destiné à une ligne (2) de teléconununications par fibres optiques par laquelle on fait passer un signal dans une direction prédéterminée (S), du type comprenant une fibre active dopée par un dopant fluorescent et un coupleur optique par lequel une énergie lumineuse de pompage est envoyée dans la fibre active, caractérisé en ce qu'il comprend un étage amont d'amplification ($S_M$) et un étage aval d'amplification ($S_V$) connectés à la suite le long de la ligne (2) dans la direction (S) du - signal de transmission, dans lequel l'étage amont d'amplification ($S_M$) comprend un tronçon amont (9) de fibre active donc par un dopant fluorescent et couplée avec faibles pertes en série sur la ligne (2) de fibres optiques, un coupleur optique amont (10) couplé en série en aval du tronçon amont (9) de fibre active, des moyens (11, 12) pour envoyer de l'énergie de pompage vers le tronçon amont (9) de fibre active par l'intermédiaire du coupleur amont (10), ledit coupleur étant oriente pour amener l'énergie de pompage à se propager vers ledit tronçon amont (9) de fibre active en sens opposé de la direction prédéterminée (S) du signal, et dans lequel l'étage aval d'amplification (S$_V$) comprend un tronçon aval (3) de fibre active dopée par un dopant fluorescent et couplée en série dans la fibre optique (2), un coupleur optique aval (4) couplé en série au tronçon aval (3) de fibre active, des moyens (5, 6) pour envoyer de l'énergie de pompage dans le tronçon aval (3) de fibre active par l'intermédiaire du coupleur aval (4), un premier isolateur optique (7) couplé en série en amont du tronçon aval (3) de fibre active, un deuxième isolateur optique (8) couplé en série en aval du tronçon aval (3) de fibre active, le gain du tronçon amont (9) de fibre active étant inférieur à une valeur maximale prédéterminée, de manière à rendre négligeable le bruit d'interférences dans le tronçon amont (9) de fibre active, et étant supérieur à une valeur minimale, de manière à rendre la contribution à la valeur du bruit global de l'amplificateur (1) provenant de la valeur de bruit des composants associés situés en aval du tronçon amont (9) de fibre active inférieure à une fraction prédéterminée de la valeur de bruit du tronçon amont (9) de fibre active.

2. Amplificateur optique selon la revendication 1, caractérisé en ce que la fraction prédéterminée est de 1/10.

3. Amplificateur optique selon la revendication 2, caractérisé en ce que la valeur maximale prédéterminée est 100 fois plus faible que la moyenne géométrique des pouvoirs de réflexion amont et aval du tronçon amont (9) de fibre active.

4. Amplificateur optique selon la revendication 3, caractérisé en ce que la valeur maximale prédéterminée est 100 fois plus faible que la moyenne géométrique du pouvoir de réflexion provenant d'une diffusion de Rayleigh à travers la fibre de ligne en amont du tronçon amont (9) de fibre active et du pouvoir de réflexion du premier isolateur (7) en direction du tronçon amont (9) de fibre active.

5. Amplificateur optique selon la revendication 2, caractérisé en ce que le gain du tronçon amont (9) de fibre active est dans la fourchette de 8 à 15 dB.

6. Amplificateur optique selon la revendication 1, caractérisé en ce que le coupleur aval (4) est situé en amont du tronçon aval (3) de fibre active et est orienté pour faire propager l'énergie de pompage dans le tronçon aval (3) de fibre active dans la même direction que la direction prédéterminée (S) du signal.

7. Amplificateur optique selon la revendication 1, caractérisé en ce que le dopant de l'âme des tronçons (3, 9) de fibre active est de l'erbium.

8. Amplificateur optique selon la revendication 1, caractérisé en ce que les coupleurs optiques (4, 10) sont des coupleurs à fibres fondues.

9. Amplificateur optique selon la revendication 1, caractérisé en ce que le premier isolateur optique (7) a, en direction du tronçon amont (9) de fibre active et pour la même longueur d'onde que le signal de télécommunications, un pouvoir de réflexion qui ne dépasse pas de plus de 10 dB le pouvoir de réflexion provenant d'une diffusion de Rayleigh à travers la fibre (2) de la ligne.

10. Procédé pour amplifier un signal optique dans une ligne de télécommunication par fibres optiques, par laquelle on fait passer un signal dans une direction prédéterminée (S), au moyen d'un amplificateur optique (1) à fibres actives, caractérisé en ce qu'il comprend les étapes consistant à :

  - amplifier le signal dans un étage amont d'amplification (S$_M$) pompé à contre-courant, qui comprend une fibre active amont (9) couplée directement à la ligne de télécommunications, avec un gain inférieur à une valeur maximale prédéterminée de façon à rendre négligeable le bruit d'interférence dans la fibre active amont (9) et supérieur à une valeur minimale afin de rendre la contribution à la valeur du bruit global de l'amplificateur (1) provenant de la valeur de bruit des composants associés situés en aval du tronçon amont (9) de fibre active inférieure à 1/10 de la valeur de bruit du tronçon amont (9) de fibre active, et

    amplifier en outre successivement le signal dans un étage aval d'amplification (S$_V$), couplé à la suite le long de la ligne (2) dans la direction (S) du signal de transmission, avec un gain qui est le complément au gain total souhaité d'amplification de l'amplificateur (1), et empêcher les réflexions du signal dans l'étage aval d'amplification.

11. Procédé selon la revendication 10, caractérisé en ce que la valeur maximale prédéterminée est 100 fois plus faible que la moyenne géométrique des pouvoirs de réflexion amont et aval de la fibre active amont (9).

12. Procédé selon la revendication 10, caractérisé en ce que la valeur maximale prédéterminée est 100 fois plus faible que la moyenne géométrique du pouvoir de réflexion provenant d'une diffusion de Rayleigh à travers la fibre de ligne en amont de la fibre active amont (9) et du pouvoir de réflexion de l'étage aval d'amplification (S$_V$) en direction de la fibre active amont (9).

FIG.1

FIG.2